# EUROPÄISCHE PATENTSCHRIFT

(11) **EP 0 368 140 B1**
(45) Veröffentlichungstag und Bekanntmachung des Hinweises auf die Patenterteilung: **11.08.1993**
(21) Anmeldenummer: 89120275.6
(22) Anmeldetag: 02.11.1989
(51) Int. Cl.: F16H 61/02, F16H 1/445, F16H 3/08, F16H 3/54

(54) **Verfahren zum Verstellen von Reibungskupplungen oder -bremsen**
Method for adjusting friction clutches or brakes
Méthode de réglage d'embrayages ou de freins

(30) Priorität: 08.11.1988 DE 3837861
(43) Veröffentlichungstag der Anmeldung: 16.05.1990
(73) Patentinhaber: GKN AUTOMOTIVE AKTIENGESELLSCHAFT, D-53721 Siegburg (DE)
(72) Erfinder: Stall, Eugen, Dr., D-5190 Stolberg (DE)
(74) Vertreter: Neumann, Ernst Dieter, Dipl.-Ing.

(56) Entgegenhaltungen:
- DE-A- 3 102 109
- DE-A- 3 621 348
- US-A- 3 002 401
- US-A- 4 679 463

## Beschreibung

Die Erfindung betrifft ein Verfahren zum Verstellen von Reibungskupplungen oder -bremsen in sperrbaren Differentialgetrieben oder lastschaltbaren Schaltgetrieben mit einem Stellantrieb und einer Übertragungsanordnung, wobei die Übertragungsanordnung gegeneinander verdrehbare Stellringe umfaßt, die eine eingeleitete Drehbewegung in eine axiale Bewegung zur Betätigung der Reibelemente der Reibungskupplungen oder -bremsen wandeln. Daneben betrifft die Erfindung bevorzugte Vorrichtungen zur Durchführung eines derartigen Verfahrens.

Aus der US-A-3 002 401 ist eine Sperrvorrichtung für ein Differential bekannt, bei dem eine Sperrkupplung, bestehend aus einem in Ringnuten eingreifenden Keilringelement durch eine Axialverschiebung eines der Abtriebselemente des Differentialgetriebes betätigt wird. Diese Axialbetätigung wird durch eine relative Verdrehung zweier koaxial zu dieser Kupplung liegenden Nockenscheiben eingeleitet.

Vorrichtungen zur mechanischen Kraft- oder Momentübertragung von einem Stellantrieb über eine Übertragungsanordnung auf eine Reibungskupplung oder -bremse in einem Getriebe sollen möglichst reibungsarm aufgebaut sein, wobei die Reibung im Stellantrieb und in der Kupplung oder Bremse selber die gleiche Rolle spielt wie die Reibung in der Übertragungsanordnung. Ein Grund für die gewünschte Reibungsarmut ist die mögliche Auswahl kleiner Stellantriebe und ein geringer Energieverbrauch, ein anderer Grund ist die angestrebte Annäherung an ein lineares Verhalten der Vorrichtung zur Erhöhung der Regelungsqualität einer solchen Vorrichtung.

Die Reibungseinflüsse, die in der Übertragungsanordnung vorhanden sind, erzeugen bei gegebenen Vorrichtungen einen Hysterese-Effekt, der sich besonders bei dynamischem Betrieb regelungstechnisch negativ bemerkbar macht. Hiervon ausgehend soll ein Verfahren der eingangs genannten Art bereitgestellt werden, das bei vorgegebenen Reibungskräften ein verbessertes an eine lineare Kennung angenähertes Regelungsverhalten ermöglicht. Die Lösung hierfür besteht darin, daß der Stellantrieb einen Stellmotor umfaßt, wobei dem vom Stellmotor ausgeübtem Moment eine Wechsellast zur Reduzierung der Reibungskräfte in der Übertragungsanordnung überlagert wird. Die erfindungsgemäße Wirkung beruht darauf, daß die Haftreibungskräfte bei der Änderung der Momentausübung ausgeschaltet bzw. reduziert sind.

Nach einer ersten Ausgestaltung kann eine Wechsellast mit bestimmter Frequenz und bestimmtem Puls-Pausen-Verhältnis durch Modulation des das Moment erzeugenden Stellmotors erfolgen. Eine zweite Möglichkeit ist darin zu sehen, an geeigneter Stelle ein unabhängiges Pulsierglied mit der Übertragungsanordnung oder dem Stellmotor zu verbinden, wobei dessen Ansteuerung in gleicher Weise wie eben genannt erfolgt, die Art der pulsierenden Krafterzeugung jedoch nicht dem gleichen Prinzip wie im Stellmotor gehorchen muß.

Anwendungen des erfindungsgemäßen Verfahrens sind bei unterschiedlichen Getriebebauformen möglich. Besonders bei hoch übersetzten Übertragungsanordnungen kann durch das vorgesehene Verfahren die in bestimmten Anwendungsfällen unzulässige Hemmung der Kupplung oder Bremse verringert werden.

Ein erster bevorzugter Anwendungsfall des erfindungsgemäßen Verfahrens sind Differentialgetriebe mit extern steuerbarer Sperrwirkung, bei denen der Sperrgrad über eine Lamellenkupplung eingestellt werden kann. Ein zweiter bevorzugter Anwendungsfall für das erfindungsgemäße Verfahren ist ein Schaltgetriebe, bei dem ohne Zugkraftunterbrechung Zahnräder mit ihren Wellen mittels Reibungskupplungen anstelle von Synchronisiereinrichtungen und Klauenkupplungen gesperrt bzw. freigegeben werden können.

Da für die Betätigung der Lamellenkupplungen relativ hohe Betätigungskräfte erforderlich sind, die mit vergleichsweise kleinen und leistungsschwachen elektrischen Stellmotoren betätigt werden sollen, ist eine Übertragungsanordnung mit hoher Übersetzung erforderlich. Entsprechende mechanische Einrichtungen haben üblicherweise Reibungsverluste, die sich in ausgeprägten Hysterese-Effekten zeigen. Durch Pulsen des Stellmotors können störende Reibungseinflüsse verringert und dadurch insgesamt das Stellverhalten verbessert werden.

Die hierbei verwendete Übertragungsanordnung kann einen drehbaren Stellring mit stirnseitigen Steuerkurven umfassen, der auf einen axial verschiebbaren Druckring wirkt, der die Reiblamellen verschiebt. Durch eine Pulsweitenmodulation des Stromes des betätigenden Elektromotors werden die Reibungsverluste, die im Hinblick auf eine regelungstechnisch beherrschbare stufenlose Veränderung des Sperrmomentes störend oder sogar funktionshindernd sind unterdrückt, so daß reproduzierbar eine genaue und stufenlose Einstellung des Sperrmomentes möglich wird. Als Stellmotor ist hier ein elektronisch geregelter Elektromotor vorgesehen.

In den Zeichnungen sind bevorzugte Vorrichtungen zur Anwendung des Verfahrens gemäß der Erfindung dargestellt.

Fig. 1 zeigt ein extern steuerbar sperrbares Differentialgetriebe in einer ersten Ausführung im Längsschnitt.

Fig. 2 zeigt ein extern steuerbar sperrbares Differentialgetriebe in einer zweiten Ausführung im Längsschnitt.

Fig. 3 zeigt ein ohne Zugkraftunterbrechung schaltbares Schaltgetriebe im Längsschnitt.

Fig. 4 zeigt ein Schaltgetriebe nach Fig. 3 mit einem Stellglied in Form eines E-Motors im Querschnitt.

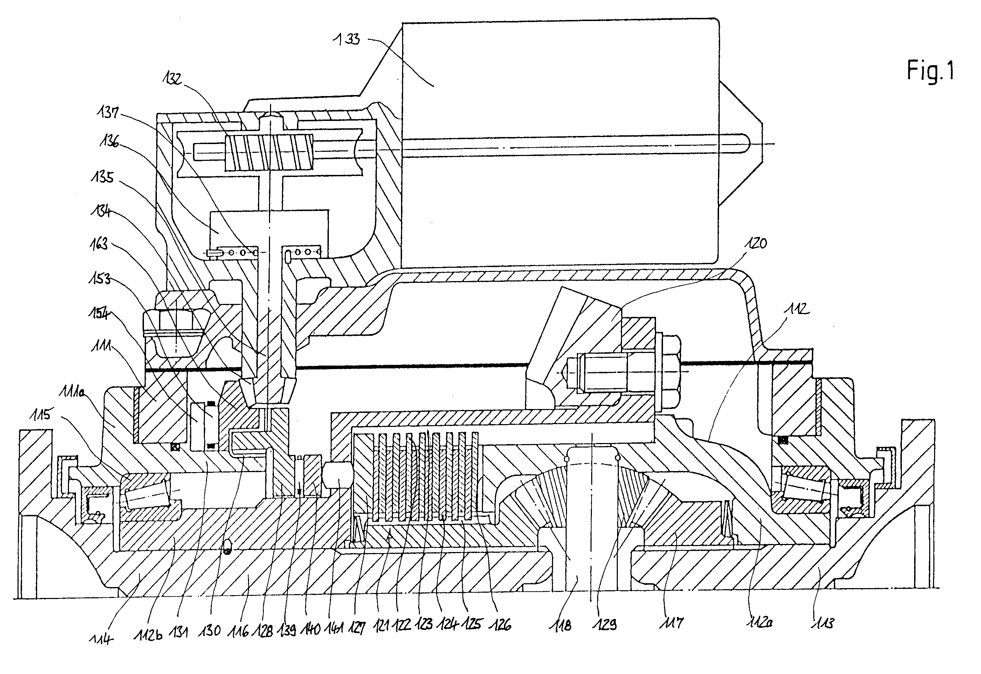

In Fig. 1 ist in einem Gehäuse 111 und einem damit verbundenen Lagerträgern 111a über Lager 115 ein Differentialkorb 112 drehbar angeordnet. Der Differentialkorb 112 ist geteilt ausgebildet und umfaßt einen ersten Teil 112a, in dem das erste Abtriebskegelrad 117 und das zweite Abtriebskegelrad 116 aufgenommen sind, welche mit auf einem als Bolzen ausgebildeten Träger 118, der im Teil 112a des Differentialkorbes 112 mit diesem drehend angeordnet ist, drehbar gelagerten Ausgleichskegelrädern 129, kämmen. Der zweite Abschnitt 112b des Differentialkorbes 112 ist mit dem ersten Abschnitt 112a drehfest verbunden. Er dient zur Aufnahme einer Reibanordnung 121. Ferner ist an einer Flanschfläche des Differentialkorbteiles 112b ein Tellerrad 120 angeschlossen, über welches der Differentialkorb 112 vom Motor eines Fahrzeuges antreibbar ist. Die Abtriebskegelräder 116, 117 weisen Bohrungen mit Verzahnungen auf, in welche beispielsweise Steckanschlußwellen 113, 114 eingesteckt sind, die zur Verbindung mit den Antriebs-Verbindung mit den Antriebswellen für Hinterräder eines Fahrzeugs dienen. Es ist jedoch auch denkbar, daß die zu den Antriebswellen gehörenden Gelenke mit entsprechenden Zapfen ausgerüstet sind, die unmittelbar in die Bohrungen der Abtriebskegelräder 116, 117 einsteckbar sind. Die beiden Abtriebskegelräder 116, 117 sind jeweils drehbar in dem Differentialkorb 112 aufgenommen.

Die Reibanordnung 121 besteht aus Außenlamellen 122 und Innenlamellen 124 besteht. Die Innenlamellen 124 besitzen in ihrer Bohrung Verzahnungen, mit denen sie auf einer entsprechenden Außenverzahnung 125 eines Fortsatzes des Abtriebskegelrades 116 drehfest, jedoch verschieblich aufgenommen sind. Die jeweils zwischen zwei Innenlamellen 124 angeordneten Außenlamellen 122 weisen auf ihrem Außenumfang ebenfalls Zähne auf, die in entsprechende Nuten oder Verzahnungen 123, die im Differentialkorb 112 bzw. dessen zweiten Abschnitt 112b angeordnet sind, drehfest eingreifen. Die Außenlamellen 122 sind ebenfalls in Axialrichtung verstellbar. Die Reibanordnung 121 stützt sich zum einen axial an der Stützfläche 126, die Bestandteil des ersten Teiles 112a des Differentialkorbes 112 ist, ab, zum anderen ist die Reibanordnung 121 über eine Druckplatte 127 druckbeaufschlagbar. Es sind im zweiten Abschnitt 112b des Differentialkorbes 112 durchdringende Stößel 141 vorgesehen, an die eine außerhalb des Differentialkorbes 112 angeordnete Druckscheibe 140 anliegt. Im Bereich der Anordnung der Stößel 141 ist der Differentialkorb 112 b mit einer radial gerichteten Fläche versehen.

Die Beaufschlagung der Reibanordnung 121 zur Abbremsung des Abtriebkegelrades 116 gegenüber dem Differentialkorb 112 ist nachfolgend beschrieben. Im Lagerträger 111a des Gehäuses 111 ist drehfest, aber axial verschiebbar auf einem Lagerträgeransatz 131 ein Stellring 128 angeordnet.

Der Lagerträgeransatz 131 ist hierzu mit einer Keilverzahnung 130 versehen, auf welcher der Stellring 128 mit in einer Bohrung seines Ansatzes angebrachten, entsprechenden Zähnen geführt ist. Hierdurch wird eine drehfeste Verbindung des Stellringes 128 zum Lagerträger 111a des Gehäuses 111 erreicht, wobei jedoch aufgrund der Verzahnung 130 eine Axialverschiebung in Richtung auf die Reibanordnung 121 möglich ist. Zwischen einer Radialfläche des Stellringes 128 und der Druckplatte 140 ist ein Axialdrucklager 139 eingebaut. Hierdurch wird die Reibung verringert, im Hinblick darauf, daß die Druckplatte 140 mit dem Differentialkorb 112 umläuft. Auf dem Lagerträgeransatz 131 ist ferner ein Stützring 163 drehbar, aber axial unverschieblich angeordnet. Der Stützring 163 stützt sich gegen ein Axiallager bestehend aus den Wälzkörpern 153 und Stützring 154 ab. Stützring 163 und Stellring 128 weisen radial verlaufende Stirnbereiche auf, die einander gegenüberliegen und sich über Nockenbahnen aneinander abstützen.

Zur Erzielung der Drehbewegung ist der Stützring 163 in seinem radial äußeren Abschnitt mit einer Kegelradverzahnung 134 versehen, in die ein Ritzel 135 eingreift. Das Ritzel 135 ist über einen Freilauf 136 mit einer vom Motor 133 aus gesehen, der als Elektromotor ausgebildet ist, ersten Übersetzungsstufe 132 verbunden. Ferner ist zwischen dem Gehäuse 111 und der zum Ritzel 135 gehörenden Welle, die durch das Gehäuse 111 nach außen geführt ist, eine Rückstellfeder 137 angeordnet, die als Spiralfeder ausgebildet ist. Sie kann auch bei reversierbaren Untersetzungsgetrieben an der Motorwelle angreifen. Gegebenenfalls kann sogar die Rückstellfeder entfallen. Die Ansteuerung des Motors 133, kann auf bekannte Art und Weise erfolgen, beispielsweise unter Nutzung von Signalen, die einen Schlupf an den Rädern anzeigen.

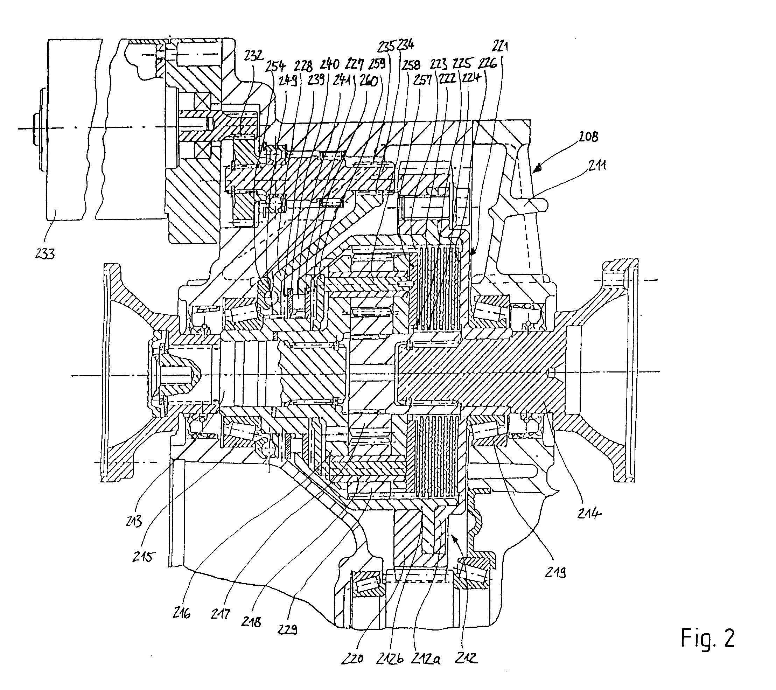

In Figur 2 ist ein extern gesteuert sperrbares Ausgleichsgetriebe 208 dargestellt. In dem Gehäuse 211 ist über Lager 215, 219 der Differentialkorb 212 drehbar angeordnet. Der Differentialkorb 212 ist geteilt ausgebildet. Als Abtriebselemente im Differentialkorb 212 sind ein Planetenträger 216 und ein Abtriebsrad 217 aufgenommen. Auf als Hülsen ausgebildeten Drehzapfen 218, die im Planetenträger 216 angeordnet sind, sind achsparallele Ausgleichsräder 229 drehbar gelagert. Ferner ist an einer Flanschfläche des Differentialkorbes 212 das Tellerrad 220 angeschlossen, über welches der Differentialkorb 212 vom Motor eines Fahrzeuges antreibbar ist. Die Abtriebselemente 216, 217 weisen Innenkeilverzahnungen auf, in welche Steckanschlußwellen 213, 214 eingesteckt sind, die zur Verbindung mit den Antriebswellen dienen. Alternative Wellen/Flanschkonstruktionen, links-rechts, sind zu ersehen. Der zweite Abschnitt 212b des Differentialkorbes 212 ist mit dem ersten Abschnitt 212a drehfest verbunden. Die beiden Abtriebselemente 216, 217 sind jeweils drehbar in dem Differentialkorb 212 aufgenommen. Weiter ist eine Reibanordnung 221 vorgesehen, die aus Außenlamellen 222 und Innenlamellen 224 besteht. Die Innenlamellen 224 besitzen in ihrer Bohrung Verzahnungen, mit denen sie auf einer entsprechenden Außenverzahnung 225 eines Fortsatzes des Abtriebsrades 217 drehfest, jedoch verschieblich aufgenommen sind. Die jeweils zwischen zwei Innenlamellen 224 angeordneten Außenlamellen 222 weisen auf ihrem Außenumfang ebenfalls Zähne auf, die in entsprechende Nuten oder Verzahnungen 223, die im Differentialkorb 212 angeordnet sind, drehfest eingreifen. Die Außenlamellen 222 sind ebenfalls in Axialrichtung verschiebbar. Die Reibanordnung 221 stützt sich zum einen axial an der Stützfläche 226, die Bestandteil des Differentialkorbes 212 ist, ab, zum anderen ist die Reibanordnung 221 über eine Druckplatte 257 druckbeaufschlagbar. Es sind die Drehzapfen 218 durchdringende Stößel 258 vorgesehen, die von einer ersten Druckscheibe 259 beaufschlagt werden. An dieser stützt sich über ein erstes Axiallager 260 eine Druckplatte 227 ab, die über weitere Stößel 241 verstellbar ist, an denen eine außerhalb des Differentialkorbes 212 angeordnete zweite Druckscheibe 240 anliegt. Zwischen einer Radialfläche des Stellringes 228 und der Druckplatte 240 ist ein zweites Axialdrucklager 239 eingebaut. Hierdurch wird die Reibung verringert, da die Druckplatte 240 mit dem Differentialkorb 212 umläuft.

Die Beaufschlagung der Reibanordnung 221 zur Abbremsung des Abtriebrades 217 gegenüber dem Differentialkorb 212 ist nachfolgend beschrieben. Im Gehäuse 211 ist drehfest und axial unverschiebbar ein Stützring 254 angeordnet. Auf einem Lagerträgeransatz 231 ist ferner ein Stellring 228 drehbar und axial verschiebbar angeordnet. Der Stellring 228 stützt sich über Wälzkörpern 249, die in Kugelrillen laufen, an dem Stützring 254 ab. Stellring 228 und Stützring 254 weisen radial verlaufende Stirnbereiche auf, die einander gegenüberliegen. Bei dem dargestellten Beispiel besitzt der Stellring 228 auf seiner dem Stützring 254 zugewandten Stirnfläche mindestens drei umfangsverteilt angeordnete und ansteigend verlaufende Kugelrillen. Der Stützring 254 besitzt die gleiche Anzahl gegensinnig ansteigend verlaufende Kugelrillen. Im Ausgangszustand, wenn die Reibanordnung 221 nicht durch eine Axialkraft beaufschlagt ist, also bei im offenen Zustand arbeitenden Kegelradausgleichsgetriebe 208, befinden sich Stellring 228 und Stützring 254 in der zueinander nächstmöglichen Position. Bei Verdrehung des Stellringes 228 verdrehen sich die Kugelrillen relativ zueinander und verschieben den Stellring 228 in Richtung auf die Reibanordnung 221, die zu einer vorbestimmten Sperrung und damit Ankupplung der Bewegung des Abtriebrades 217 und gegebenenfalls des Abtriebsrades 216 an die Drehbewegung des Differentialkorbes 212 führt.

Zur Erzielung der Drehbewegung ist der Stellring 228 in seinem radial äußeren Abschnitt mit einer Verzahnung 234 versehen, in die ein Ritzel 235 eingreift. Die Verzahnung 234 ist vorzugsweise als eine Schrägverzahnung ausgelegt, um den Stellring 228 gegen die Reibanordnung 221 während des Sperrkraftaufbaus zu bewegen. Das Ritzel 235 ist durch die Untersetzung 232 von dem E-Motor 233 angetrieben. Erfindungsgemäß ist der E-Motor von pulsierendem Strom oder Spannung getrieben.

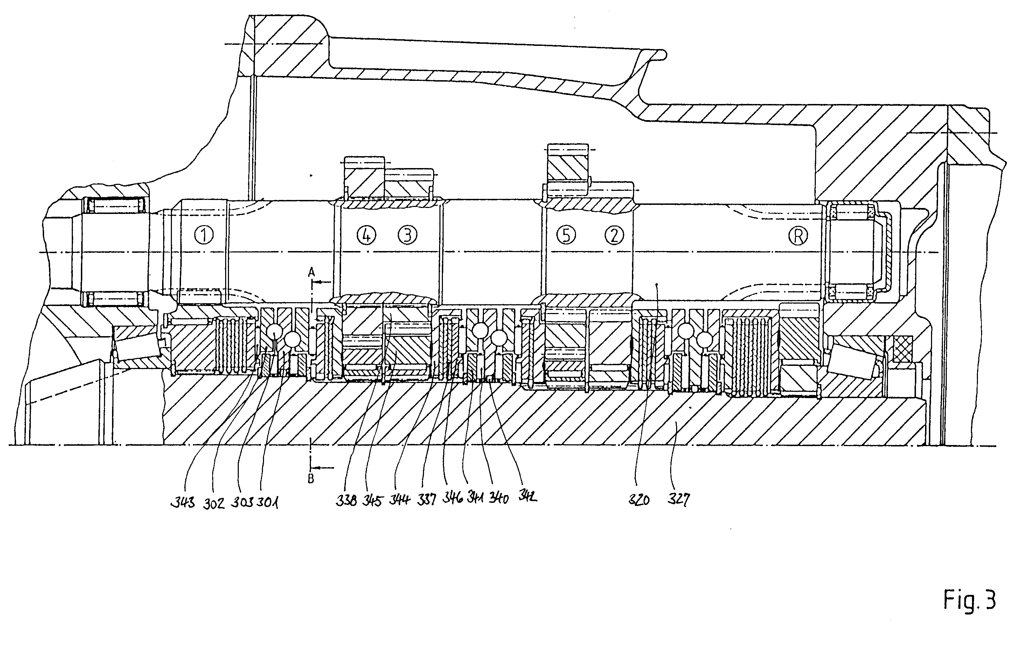

Fig. 3 zeigt einen Längsschnitt durch die beiden Wellen eines Schaltgetriebes. Dieses umfaßt 5 Vorwärtsgänge und einen Rückwärtsgang. Die Schaltmechanismen, für je zwei Gänge pro Mechanismus in dreifacher Ausführung befinden sich zwischen den jeweiligen Gängen - ähnlich der Synchronringschiebemuffen in herkömmlichen manuell schaltbaren PKW Getrieben. Die Schaltmechanismen können entweder auf der oben liegenden Antriebswelle 320 oder, wie dargestellt, auf der unten angeordneten Abtriebs- bzw. Vorgelegewelle 327 montiert werden. Zu bevorzugen ist die Anordnung auf der unten angeordneten Welle, da hierbei die dazugehörigen Reiblamellen 337 ohne weiteres ausreichend mit Öl geschmiert werden. Die Ritzel für den ersten Gang sowie den Rückwärtsgang sind, wie ersichtlich, in der Antriebswelle 320 integriert.

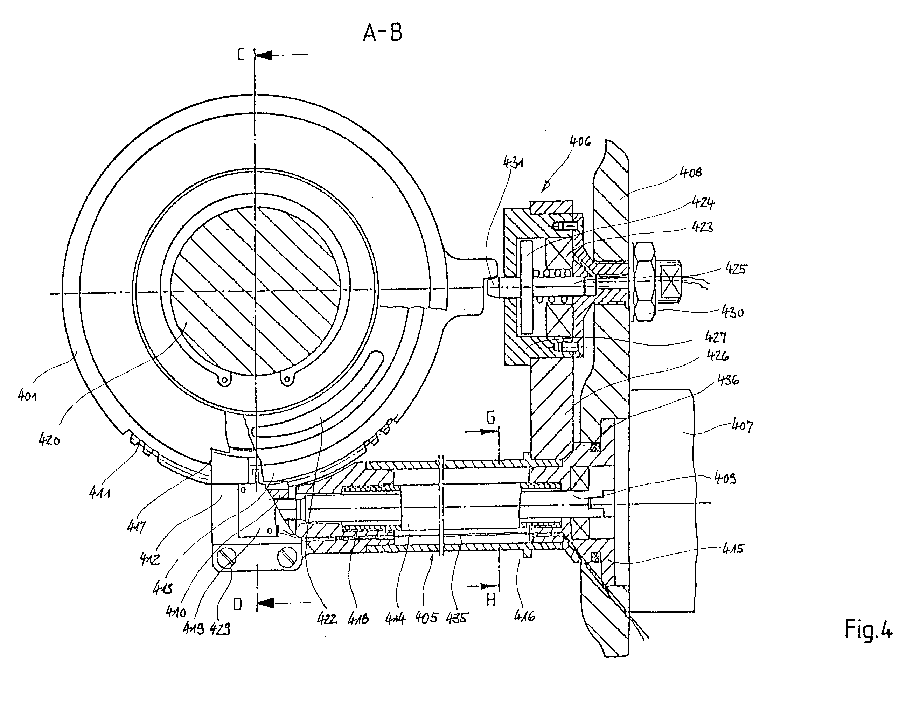

Figur 4 zeigt die Anordnung eines Spreizscheibenantriebs 405 bestehend im wesentlichen aus einer mittleren und in beiden Richtungen drehbaren und axial nicht verschiebbaren Spreizscheibe (Verstellscheibe) 401, für zwei nicht drehbare aber axial verschiebbaren Spreizscheiben (Druckscheiben) und dazwischen in Kugelrillen 422 mit Steigung geführten Kugeln (nicht dargestellt) und eine eventuelle Verriegelung der mittleren Spreizscheibe, was vor allem für den Rückwärtsgang vorgesehen wird.

Ein E-Motor 407 - mit seinem Motorflansch montiert auf der Getriebegehäusewand 408 - weist auf seiner verlängerten Antriebswelle 409 ein Schraubenradritzel 410 oder eine Schnecke auf, die mit der Verzahnung 411 am Außenumfang der mittleren Spreizscheibe 401 in Eingriff ist.

Das Ritzel bzw. die Schnecke sind in einem Ritzelgehäuse 412, 428 gelagert, das in passenden Nuten 413 der mittleren Spreizscheibe 401 geführt wird. Die Drehsicherung des Gehäuses 412, 428 ist relativ zu der mittleren Spreizscheibe 401 durch ein Verbindungsrohr 414 zwischen Ritzelgehäuse 412, 428 und Motorträgerflansch 415 vorgesehen. Die Drehsicherung der beiden Druckscheiben (nicht dargestellt) wird vorzugsweise direkt gegenüber dem Ritzelgehäuse 412, 428 bewirkt. Diese erfolgt durch eine entsprechende Aussparung in jeder der Druckscheiben deren Seitenflanken sich an den Gehäusestirnflächen abstützen.

Die tangentiale Führung des Ritzelgehäuses 412, 428 relativ zum Getriebegehäuse 408 wird von einem Führungsrohr 414 bewirkt.

Ein wichtiger Aspekt liegt in der Betätigung von zwei Lamellenkupplungen durch einen E-Motor.

Die Spreizscheibe 401 ist auf beiden Seiten von Axialdrucklagern geführt, deren Abstützscheiben auf der Welle die jeweiligen Reaktionskräfte der Spreizung abfangen.

Vorzugsweise soll die Drehführung der Spreizscheibe 401 von einem Radiallager getragen werden.

Mikroschalter 419 sind an dem Gehäuse 412 angebaut, deren Taster auf den Flanken der Spreizscheibe 401 gleiten. Durch entsprechende Absenkungen 433 in der Tastenlaufbahn an einer bzw. beiden Seiten der Scheibe 401 wird die Nullstelle angezeigt.

## Patentansprüche

1. Verfahren zum Verstellen von Reibungskupplungen oder -bremsen in sperrbaren Differentialgetrieben oder lastschaltbaren Schaltgetrieben mit einem Stellantrieb und einer Übertragungsanordnung, wobei die Übertragungsanordnung gegeneinander verdrehbare Stellringe (228, 254; 301, 302; 401) umfaßt, die eine eingeleitete Drehbewegung in eine axiale Bewegung zur Betätigung der Reibelemente der Reibungskupplungen oder -bremsen wandeln,
dadurch gekennzeichnet,
daß der Stellantrieb einen Stellmotor (233, 407) umfaßt, wobei dem vom Stellmotor ausgeübtem Moment eine Wechsellast zur Reduzierung der Reibungskräfte in der Übertragungsanordnung überlagert wird.

2. Verfahren nach Anspruch 1,
dadurch gekennzeichnet,
daß die überlagerte Wechsellast im Stellmotor (223, 407) selber erzeugt wird.

3. Verfahren nach Anspruch 1,
dadurch gekennzeichnet,
daß die überlagerte Wechsellast in einem auf den Stellmotor (223, 407) oder die Übertragungsanordnung einwirkenden Pulsierglied erzeugt wird.

4. Vorrichtung mit einem Stellantrieb und einer mechanischen Übertragungsanordnung, die gegeneinander verdrehbare Stellringe (228, 254; 301, 302; 401) umfaßt, die eine eingeleitete Drehbewegung in eine axiale Bewegung zur Beaufschlagung der Reibelemente einer Reibungskupplung wandeln, zur Durchführung des Verfahrens nach einem der Ansprüche 1 bis 3,
dadurch gekennzeichnet,
daß der Stellantrieb einen Stellmotor (233, 407) mit einer Ansteuerungsanordnung umfaßt, die ein pulsierendes Moment des Stellmotors (233, 407) - inbesondere um einen vorgegebenen Mittelwert schwankend - hervorruft.

5. Vorrichtung mit einem Stellantrieb und einer mechanischen Übertragungsanordnung, die gegeneinander verdrehbare Stellringe (228, 254; 301, 302; 401) umfaßt, die ein eingeleitete Drehbewegung in eine axiale Bewegung zur Beaufschlagung der Reibelemente einer Reibungskupplung wandeln, zur Durchführung des Verfahrens nach einem der Ansprüche 1 bis 3,
dadurch gekennzeichnet,
daß der Stellantrieb einen Stellmotor (233, 407) und ein mit dem Stellmotor oder der Übertragungsanordnung verbundenes Pulsierglied umfaßt, das ein - insbesondere um den Wert Null - pulsierendes Moment hervorruft.

6. Vorrichtung nach einem der Ansprüche 4 oder 5,
dadurch gekennzeichnet,
daß die Reibungskupplung als Lamellenkupplung (221) zwischen den ansteuerbar gegeneinander zu sperrenden Gliedern (212, 214) eines Differentialgetriebes ausgebildet ist.

7. Vorrichtung nach einem der Ansprüche 4 oder 5,
dadurch gekennzeichnet,
daß die Reibungskupplung als Lamellenkupplung (337) für ein auf einer Welle (327) eines Schaltgetriebes wahlweise sperrbaren Zahnrad (345) ausgebildet ist.

## Claims

1. A method of setting friction couplings or friction brakes in lockable differential drives or load-switchable manual gearboxes having a setting drive and a transmission assembly, the transmission assembly comprising setting rings (228, 254; 301, 302; 401) which are rotatable relative to one another and which change an introduced rotational movement into an axial movement for actuating the friction elements of the friction couplings or friction brakes,
characterised in
that the setting drive comprises a setting motor (233, 407), and that a cyclic load for reducing the friction forces in the transmission assembly is superimposed on the moment applied by the setting motor.

2. A method according to claim 1,
characterised in
that the superimposed cyclic load is generated in the setting motor (223, 407) itself.

3. A method according to claim 1,
characterised in
that the superimposed cyclic load is generated by a pulsating member acting on the setting motor (223, 407) or the transmission assembly.

4. A device having a setting drive and a mechanical transmission assembly comprising setting rings (228, 254; 301, 302; 401) which are rotatable relative to one another and which change an introduced rotational movement into an axial movement for loading the friction elements of a friction coupling, for carrying out the method according to any one of claims 1 to 3,
characterised in
that the setting drive comprises a setting motor (233, 407) with a control assembly which generates a pulsating moment of the setting motor (233, 407), especially one which fluctuates around a predetermined mean value.

5. A device having a setting drive and a mechanical transmission assembly comprising setting rings (228, 254; 301, 301; 401) which are rotatable relative to one another and which change an introduced rotational movement into an axial movement for loading the friction elements of a friction coupling, for carrying out the method according to any one of claims 1 to 3,
characterised in
the setting drive comprises a setting motor (233, 407) and a pulsating member which is connected to the setting motor or the transmission assembly and which generates a moment pulsating especially around the value zero.

6. A device according to any one of claims 4 or 5,
characterised in
that the friction coupling is designed as a plate coupling (221) arranged between the differential gear members (212, 214) to be locked relative to one another in a controllable way.

7. A device according to any one of claims 4 or 5,
characterised in
that the friction coupling is designed as a plate coupling (337) for a gearwheel (345) which is optionally lockable on a shaft (327) of a manual gearbox.

## Revendications

1. Procédé pour manoeuvrer des accouplements à friction ou des freins à friction dans des mécanismes différentiels verrouillables ou dans des mécanismes de boîte de vitesses commutables par la charge, comportant un entraînement positionneur et un dispositif de transmission, le dispositif de transmission englobant des anneaux positionneurs (228, 254; 301, 302; 401) mutuellement déplaçables en rotation, qui convertissent un mouvement de rotation introduit en un mouvement axial pour actionner les éléments de friction des accouplements ou freins à friction,
caractérisé
par le fait que le système d'entraînement positionneur comporte un moteur positionneur (233, 407) au couple duquel est superposée une charge alternative pour réduire les forces de frottement dans le dispositif de transmission.

2. Procédé selon revendication 1,
caractérisé
par le fait que la charge alternative superposée est produite dans le moteur positionneur lui-même (223, 407).

3. Procédé selon revendication 1,
caractérisé
par le fait que la charge alternative superposée est engendrée dans un organe pulsateur agissant sur le moteur positionneur (223, 407) ou sur le dispositif de transmission.

4. Dispositif avec un entraînement positionneur et un dispositif de transmisssion mécanique, comportant des anneaux positionneurs mobiles l'un par rapport à l'autre (228, 254; 301, 302; 401) qui convertissent un mouvement de rotation introduit en un mouvement axial pour solliciter les éléments de friction d'un accouplement à friction, pour mettre en oeuvre le procédé selon l'une des revendications 1 à 3,
caractérisé
par le fait que l'entraînement positionneur comporte un moteur positionneur (233, 407) avec un dispositif de commande qui provoque un couple pulsatoire du moteur positionneur (233, 407), notamment avec pulsation autour d'une valeur moyenne prédéterminée.

5. Dispositif avec un entraînement positionneur et un dispositif de transmisssion mécanique, comportant des anneaux positionneurs mobiles l'un par rapport à l'autre (228, 254; 301, 302; 401) qui convertissent un mouvement de rotation introduit en un mouvement axial pour solliciter les éléments de friction d'un accouplement à friction, pour mettre en oeuvre le procédé selon l'une des revendications 1 à 3,
caractérisé
par le fait que l'entraînement positionneur comporte un moteur positionneur (233, 407) et, lié à celui-ci ou au dispositif de transmission, un organe pulsateur qui provoque un couple pulsant, notamment autour de la valeur zéro.

6. Dispositif selon l'une des revendications 4 ou 5,
caractérisé
par le fait que l'accouplement à friction est réalisé en tant qu'accouplement à disques (221) entre les organes (212, 214), mutuellement verrouillables par commande, que comporte un mécanisme différentiel.

7. Dispositif selon l'une des revendications 4 ou 5,
caractérisé
par le fait que l'accouplement à friction est réalisé en tant qu'accouplement à disques (337) pour une roue dentée (345) blocable de manière sélective sur un arbre (327) d'un mécanisme de boîte de vitesses.
